# EUROPÄISCHE PATENTSCHRIFT

(11) **EP 0 893 303 B1**
(45) Veröffentlichungstag und Bekanntmachung des Hinweises auf die Patenterteilung: **14.12.2005**
(21) Anmeldenummer: 98113477.8
(22) Anmeldetag: 20.07.1998
(51) Int. Cl.: B60Q 1/14

(54) **Lenkstockschalter**
Steering column switch
Interrupteur sur colonne de direction

(30) Priorität: 26.07.1997 DE 19732232
(43) Veröffentlichungstag der Anmeldung: 27.01.1999
(73) Patentinhaber: Delphi Technologies Inc., Troy, MI 48007 (US)
(72) Erfinder: Leng, Peter, 65428 Rüsselsheim (DE); Weiss, Hans Günter, 55411 Bingen (DE); Reuter, Thomas, 55411 Bingen (DE); Junker, Paul, 55411 Bingen (DE)
(74) Vertreter: Becker, Bernd

(56) Entgegenhaltungen:
- EP-A- 0 645 280
- EP-A- 0 822 119
- DE-A- 4 339 095
- FR-A- 2 315 408
- FR-A- 2 442 739
- GB-A- 2 023 938

## Beschreibung

Die Erfindung bezieht sich auf einen Lenkstockschalter mit einem Träger, an dem eine Mehrzahl von in unterschiedliche Betätigungsrichtungen wirkende und mit Schaltgliedern versehene Tasten gelagert sind, die auf im Träger angeordnete Kontaktelemente einwirken.

Kraftfahrzeuge bestehen bekanntermaßen aus einer Vielzahl komplizierter Baugruppen, wobei die an dem Mantelrohr des Kraftfahrzeuges anzubringende Baugruppe eines Lenkstockschalters einen besonderen Schwerpunkt bildet.

Lenkstockschalter sind üblicherweise radial zur Lenksäule an deren Mantelrohr angebracht, wodurch bei Betätigung des Lenkrades und damit der im Mantelrohr geführten Lenksäule der Lenkstockschalter gegenüber dem Lenkrad unbeweglich ist. Der Lenkstockschalter umfaßt in der Regel einen Blinkerschalter und einen Fahrtlichtschalter. Weiterhin umfaßt der Lenkstockschalter häufig einen Wischerschalthebel für die stufenweise Betätigung der Scheibenwischer und die Betätigung der Schaltfunktionen für die Scheibenwaschanlage. Solche Lenkstockschalter sind beispielsweise aus der DE-AS 28 10 790 und der DE 35 32 532 C2 bekannt. Jeder Lenkstockschalter besitzt eine Vielzahl von miteinander in Wirkverbindung stehenden Bauteilen, die eine große Anzahl von solchen vorgenannten Schaltfunktionen realisieren. Diese auf engem Raum unterzubringenden Bauteile bewirken somit einen komplizierten Aufbau des Lenkstockschalters. Daher ist man bestrebt, die einzelnen Bauteile in Abhängigkeit vom Fahrzeugtyp so weit wie möglich vormontieren zu können und anschließend an einem am Mantelrohr der Lenksäule angeordneten Träger anzubringen.

Aus der DE 195 11 878 A1 ist ein elektrischer Tastschalter bekannt, der ein Schaltelemente aufnehmendes Gehäuse und mehrere selbsttätig rückstellende, außermittig gelagerte und nebeneinander angeordnete Tasten mit je einem auf ein Kontaktelement einwirkendes Schaltglied aufweist. Das Gehäuse des Tastschalters ist fest mit dem Lenkrad eines Kraftfahrzeuges verbunden, wobei sich der Tastschalter insbesondere zum Auslösen von Schaltfunktionen, wie beispielsweise zur temporären Geschwindigkeitssteuerung (Tempomat) des Kraftfahrzeuges eignet. Die Anordnung der Tasten nebeneinander erfordert jedoch ein erhöhtes Bauvolumen.

In aller Regel befindet sich in einem Kraftfahrzeug ein Radio- und/oder Kassettenabspiel- und/oder CD-Abspiel- und/oder CD-Wechslergerät, deren Bedienung unmittelbar am Gerät selbst vorgenommen wird. Durch den notwendigen Blickkontakt mit dem vorhandenen Gerät bei Betätigung seiner Bedienelemente wendet der Fahrzeugführer zumindest kurzzeitig den Blick vom Straßenverkehr ab und wird somit abgelenkt, was zur Unaufmerksamkeit und manchmal zu einem Unfall führt. Oftmals sind deshalb am Armaturenbrett oder an der Mittelkonsole des Kraftfahrzeuges zusätzliche Betätigungsschalter angeordnet, mit denen die Funktionen eines solchen elektronischen Unterhaltungsgerätes beeinflußt werden können. Dennoch liegen diese zusätzlichen Betätigungsschalter nicht im direkten Zugriffsbereich des Fahrzeugführers.

Die den nächstliegenden Stand der Technik bildende FR-A-2 315 408 offenbart einen Lenkstockschalter mit einem Träger und mit Schaltgliedern versehenen Tasten, wobei am Träger eine Mehrzahl von in unterschiedliche Betätigungsrichtungen wirkende Tasten zur Beaufschlagung von im Träger angeordneten Kontaktelementen gelagert sind

Es ist Aufgabe der Erfindung, einen Lenkstockschalter der eingangs genannten Art zu schaffen, der bei kompaktem Aufbau gleichzeitig in der Lage ist, eine Vielzahl von Schaltfunktionen, insbesondere eines in einem Kraftfahrzeug vorhandenen elektronischen Unterhaltungsgerätes, zu übertragen, der komfortabel bedienbar und praktisch vollständig vormontierbar sowie leicht an einer Halterung eines Mantelrohres festlegbar ist.

Erfindungsgemäß wird die Aufgabe dadurch gelöst, daß der Träger mit zugeordneter Steckbefestigung an einer von einer Lenkstockverkleidung umgebenen Halterung des Mantelrohres der Lenksäule eines Kraftfahrzeuges festlegbar ist, wobei der Träger in einem Trägergehäuse aufgenommen ist, das einerseits zur Lenkstockverkleidung offen und an dieser anliegbar ist und andererseits Durchbrüche zum Aufnehmen der Tasten und zum Hindurchführen der am Träger ausgebildeten Steckbefestigung aufweist.

Durch diese Maßnahmen wird ein Lenkstockschalter zur Verfügung gestellt, der bei extrem kleiner Bauweise eine Vielzahl von Schaltfunktionen in sich vereint, da die Tasten in unterschiedlicher Lage am Lenkstockschalter angebracht und somit in verschiedenen räumlichen Richtungen betätigbar sind. Durch diese Schaltlogik wird eine ergonomisch eindeutige Zuordnung zwischen Schaltfunktion und Betätigungsrichtung erreicht, wodurch Fehlbetätigungen praktisch ausgeschlossen sind. Aufgrund der Integration dieser in unterschiedlichen Richtungen wirkenden Tasten in einem kompakten Träger, der mit seiner Steckbefestigung während der Montage des Kraftfahrzeuges leicht und in einfacher Weise an der Halterung des Mantelrohres der Lenksäule festgelegt wird, kann der Lenkstockschalter komplett vormontiert werden, wobei bei dessen Montage am Fließband außer dem Einsteckvorgang selbst keine weiteren direkten Montagehandlungen erforderlich sind. Wie in der nachfolgend weiter beschriebenen Ausgestaltung des erfindungsgemäßen Lenkstockschalters zu ersehen ist, sind keine zusätzlichen separaten Bauteile, wie Blattfedern, Druckfedern oder dergleichen Teile notwendig, da die Anzahl der erforderlichen Bauteile auf Grund ihrer speziellen Ausbildung auf ein Minimum beschränkt wird.

Nach einer Weiterbildung der Erfindung ist am Träger eine mit Kontaktelementen bestückte Leiterplatine angeordnet. Diese Kontaktelemente werden von den am Träger angeordneten Tasten betätigt und bewirken die jeweils gewünschte Schaltfunktion. Zweckmäßigerweise sind die Kontaktelemente als Mikroschalter ausgebildet, denn diese sind sehr leicht und in großen Stückzahlen herzustellen und wirken sehr zuverlässig, wobei eine große Anzahl von Schaltvorgängen ausgeführt werden kann.

Um eine leichte Montage oder gegebenenfalls Demontage zu Reparatur- bzw. Austauschzwecken der Leiterplatine zu ermöglichen, ist diese bevorzugt mittels Klipsverbindungen am Träger befestigt ist. Somit kann durch minimalen Kraftaufwand die Klipsverbindung gelöst und die Leiterplatine vom Träger entfernt bzw. wieder montiert werden. Des weiteren ist die Leiterplatine mit einer Anschlußeinheit zum Verbinden mit Anschlußleitungen zur Übertragung von Schaltfunktionen der durch die Tasten betätigbaren Kontaktelemente versehen.

Die offene Seite des Trägergehäuses ist mit einer Dichtlippe versehen, die sich an der Lenkstockverkleidung in Anlage befinden kann und die aus einem elastischen Gummi- oder Kunststoffmaterial besteht. Dadurch erfolgt eine sichere staubfreie Abdichtung des Lenkstockschalter gegenüber der Lenkstockverkleidung, ohne daß es beim Auftreten von Vibrationen durch die Fahrbewegung des Kraftfahrzeuges zu Scheuerstellen zwischen diesen Anlagepunkten kommt. Bevorzugt sind zumindest der Träger und die Steckbefestigung als einstückiges Kunststoff-Spritzgußteil ausgebildet. Dadurch ist kein zusätzlicher Montageaufwand für die Steckbefestigung und den Träger des Lenkstockschalters notwendig.

Oftmals wird durch den Bediener eine überhöhte Krafteinwirkung auf derartige Bedienelemente ausgeübt, so daß es erforderlich ist, daß der Lenkstockschalter aus Sicherheitsgründen bei einem solchen übermäßigen Kraftangriff abbricht, beispielsweise bei einem Unfall des Kraftfahrzeuges, um den Fahrzeugführer vor Verletzungen durch den Lenkstockschalter zu schützen. Zu diesem Zweck ist im Übergangsbereich des Trägers zur Steckbefestigung eine Sollbruchstelle eingeformt.

Zur Verhinderung einer unbeabsichtigten Drehbewegung des Lenkstockschalters um seine Längsachse ist die Steckbefestigung mit einer Dreifachnutführung versehen, die in ein entsprechendes Gegenstück der Lenkstockverkleidung einführbar ist. Die Dreifachnutführung verhindert auch einen unrichtigen Einbau des Lenkstockschalters und sichert dessen Endstellung nach der Montage. Der Einfluß der Fertigungstoleranzen wird dadurch auf ein Minimum in Bezug auf eine Wackelfreiheit reduziert. Zusätzlich wird der Lenkstockschalter noch dadurch lagepositioniert, daß in der Steckbefestigung ein Klipsarm federnd gelagert ist, der sich mit der Halterung des Mantelrohres der Lenksäule in Rasteingriff befinden kann. Dem Klipsarm ist ein in das Schalterinnere ragender Entriegelungsarm zugeordnet, der es ermöglicht, den montierten Schalter von außen zu entriegeln und auszutauschen.

In weiterer Ausgestaltung des erfindungsgemäßen Lenkstockschalters sind eine Anzahl von Tasten vorgesehen, die bestimmte, ihnen zugeordnete Schaltfunktionen auslösen sollen. So ist zunächst an der Stirnseite des Trägers eine in linearer Einsteckrichtung des Trägers in die Halterung des Mantelrohres betätigbare Drucktaste angeordnet, die mit ihrem Schaltglied ein auf der Leiterplatine befestigtes Kontaktelement betätigt. Da die Leiterplatine etwa parallel zur linearen Betätigungsrichtung der Drucktaste liegt, ist es notwendig, das der Drucktaste zugeordnete Kontaktelement in eine andere Einbaulage als die übrigen Kontaktelemente für die weiteren Tasten zu bringen. Dies geschieht dadurch, daß das eine Kontaktelement gegenüber den anderen Kontaktelementen in aufrechter Stellung auf der Leiterplatine befestigt ist, so daß das Schaltglied der Drucktaste ungehindert auf das Kontaktelement einwirken kann.

Damit die selbsttätige Rückstellung der Drucktaste in ihre Ausgangsstellung bewirkt wird, ist die Drucktaste federnd gegen das zugehörige Kontaktelement abgestützt. Dies kann zweckmäßigerweise durch eine einstückig am Träger ausgeformte federnde Anschlagzunge oder gegebenenfalls auch durch eine Druckfeder erfolgen, die sich gegen das Schaltglied der Drucktaste stützt. Die Drucktaste selbst ist in einer mit der Stirnseite des Trägers einstückig ausgeformten Aufnahme gelagert.

Weiterhin ist beidseitig der Drucktaste jeweils eine weitere lotrecht zu dieser betätigbare Kipptaste an der Stirnseite des Trägers angeordnet, wobei deren jeweiliges Schaltglied ein zugeordnetes, auf der Leiterplatine befestigtes Kontaktelement betätigt. Durch diese Anordnung der Kipptasten unmittelbar neben der Drucktaste wird eine leichte Bedienbarkeit des Lenkstockschalters durch die Finger einer Hand des Fahrzeugführers ermöglicht. Ebenso werden auf kleinstem Raum eine Mehrzahl von Funktionstasten untergebracht. Bevorzugt sind die Kipptasten in jeweils einem einstückig mit dem Träger ausgebildeten Lagerbock kippbar gelagert. Jeder Lagerbock und jede zugehörige Kipptaste weist Lagerlaschenpaare auf, wobei die Lagerlaschenpaare des Lagerbockes oder der Kipptaste mit Lagerzapfen bzw. Lagerzapfenöffnungen versehen sind, die sich in gegenseitigem Eingriff befinden.

Um auch jede der Kipptasten nach ihrer Betätigung in ihrer Ausgangs- Null- bzw. Ruhestellung zurück zu bringen, ist diese mittels eines am Lagerbock angeformten Federelementes gehalten, das sich gegen die Innenseite der Kipptaste abstützt. Der Andanschlag der Tasten befindet sich am Gehäuse. An den Tasten sind Betätigungsarme angeformt, die auf die Kontaktelemente wirken. Die Betätigungsarme ermöglichen ein akzeptables Schaltgefühl für den Tastenweg und begrenzen die Krafteinwirkung auf den zugehörigen Mikroschalter und die Leiterplatine.

Weiterhin ist in erfindungsgemäßer Fortbildung des Lenkstockschalters an einer Längsseite des Trägers eine aus einer Ruhestellung auf- und abbewegbare Schwenktaste angeordnet, die zwei zueinander beabstandete Schaltglieder aufweist, welche jeweils ein auf der Oberseite und auf der Unterseite der Leiterplatine befestigtes Kontaktelement betätigen. Wegen der hohen Funktionalität ist die Schwenktaste ebenfalls in einem einstückig mit dem Träger ausgebildeten Lagerbock schwenkbar gelagert. Dabei weisen der Lagerbock und die Schwenktaste Lagerlaschenpaare auf. Die Lagerlaschenpaare des Lagerbockes oder der Schwenktaste sind mit Lagerzapfen bzw. Lagerzapfenöffnungen versehen, die sich in gegenseitigem Eingriff befinden. Darüber hinaus ist die Schwenktaste mittels eines am Lagerbock angeformten Federelementes in ihrer Ruhestellung gehalten, das sich gegen die Innenseite der Schwenktaste abstützt.

Damit der Träger auf einfache Weise verschlossen wird und gegebenenfalls bei einer Reparatur leicht zugänglich ist, wird das Trägergehäuse mittels Klipsverbindungen am Träger befestigt. Durch leichtes Aufdrücken kann das Trägerhäuse auf den Träger festgelegt oder durch geringe Kraftausübung auf die Klipsverbindung von diesem entfernt werden.

In bevorzugter Weiterbildung ist jede der Tasten mit einer Schaltfunktion für ein im Kraftfahrzeug vorgesehenes Radio- und/oder Kassettenabspiel- und/oder CD-Abspiel- und/oder CD-Wechslergerät belegt. Schließlich ist es von besonderem Vorteil, wenn zwei solcher Schalter sich gegenüberliegend an der Halterung des Mantelrohres der Lenksäule des Kraftfahrzeuges angeordnet sind. Durch diese Maßnahmen können eine besonders große Anzahl von Schaltfunktionen für eines oder mehrere dieser Geräte realisiert werden, wobei der oder die Lenkstockschalter im unmittelbaren Zugriffsbereich des Fahrzeugführers liegen, nämlich im Lenkradbereich des Kraftfahrzeuges. Nach einer kurzen Gewöhnungsphase ist der Fahrzeugführer in der Lage, den oder die Lenkstockschalter zu bedienen ohne den Blick darauf zu wenden, da die Anordnung der Tasten auf den Wirkungsbereich der Finger einer Hand abgestimmt sind. Der Fahrzeugführer weis somit genau, mit welchem Finger welche Taste zu bedienen ist, um eine bestimmte Schaltfunktion auszulösen. Durch die Anordnung von zwei sich gegenüberliegenden Lenkstockschaltern wird natürlich die Vielfalt der Bedienbarkeit der im Kraftfahrzeug untergebrachten Geräte bedeutend erhöht. Die Schaltlogik unterscheidet sich von der des Blinkerschalters bzw. Fahrtrichtungsschalters, wodurch eine Verwechselungssicherheit gegeben ist.

Der der Erfindung zugrunde liegende Gedanke wird in der nachfolgenden Beschreibung anhand eines Ausführungsbeispieles, das in der Zeichnung dargestellt ist, näher beschrieben. Es zeigt:
- Fig. 1: eine perspektivische Unteransicht eines erfindungsgemäßen Lenkstockschalters unter Weglassung des Trägergehäuses,

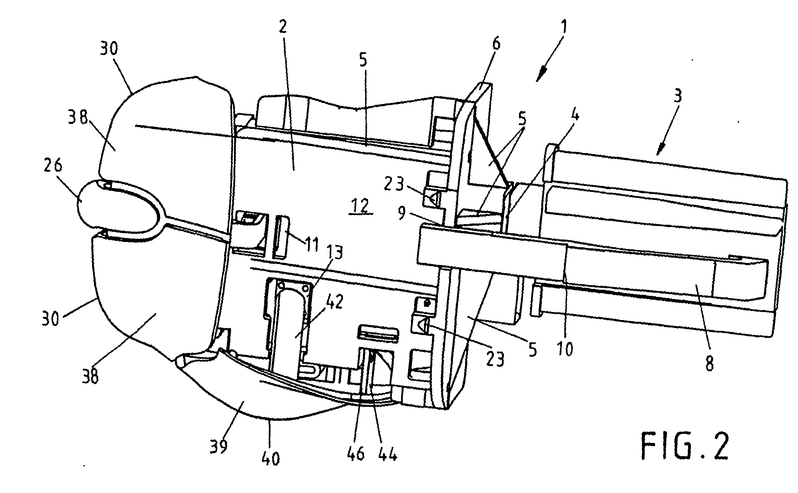

- Fig. 2: eine perspektivische Draufsicht auf den Lenkstockschalter nach Fig. 1,
- Fig. 3: eine Teilexplosivdarstellung der Schalter und des Trägergehäuses des Lenkstockschalters nach den Fig. 1 und 2 und,
- Fig. 4: eine perspektivische Unteransicht auf den Träger mit Steckbefestigung des Lenkstockschalters nach den Fig. 1 und 2.

Der Lenkstockschalter 1 besteht aus einem Träger 2, an dem eine Steckbefestigung 3 angeformt ist. Der Träger 2 mit der Steckbefestigung 3 ist als einstückiges Kunststoff-Spritzgußteil ausgebildet. Im Übergangsbereich zwischen dem Träger 2 und der Steckbefestigung 3 ist eine Sollbruchstelle 4 als ringfömige Nut ausgebildet. Daran schließt sich eine durch Versteifungen 5 abgestützte vertikale Trägerwand 6 an, die ihrerseits Versteifungen 5 zum Träger 2 aufweist.

Die Steckbefestigung 3 ragt in Einsteckrichtung des Lenkstockschalters 1 weg und ist zur Befestigung an einer nicht dargestellten, von einer Lenkstockverkleidung umgebenen Halterung des Mantelrohres der Lenksäule eines Kraftfahrzeuges vorgesehen. Dazu ist die Steckbefestigung 3 mit einer Dreifachnutführung 7 versehen, die in ein entsprechende, nicht gezeigtes Gegenstück der Halterung des Mantelrohres eingeführt wird und den Lenkstockschalter 1 in seiner Einbaulage sichert. Ein an der Steckbefestigung 3 federnd gelagerter Klipsarm 8 erstreckt sich über die Länge der Steckbefestigung 3 hin zu einer Nut 9 in der Trägerwand 6. Durch die Auflage des Klipsarmes 8 in der Nut 9 der Trägerwand 6 federt der Klipsarm 8 über seine gesamte Länge. Darüber hinaus ist dieser mit einem Entriegelungsarm versehen.

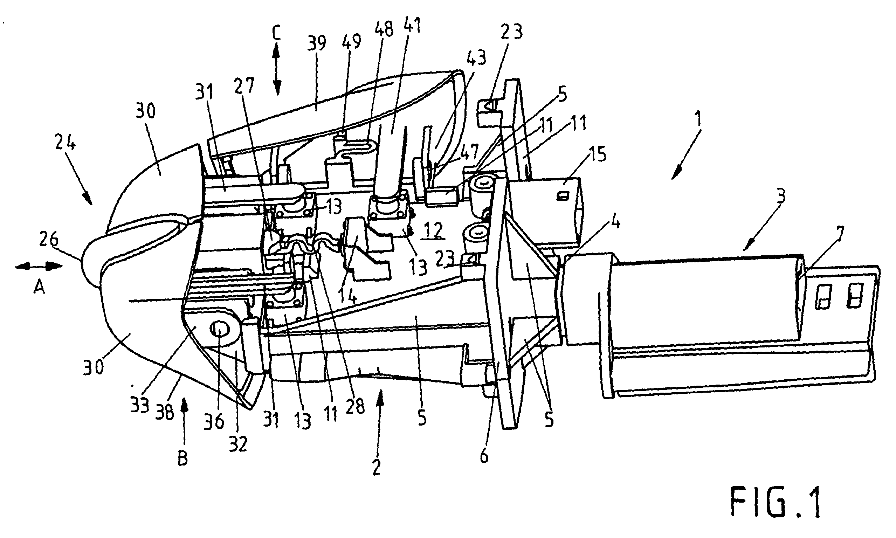

Im Träger 2 ist über mehrere Klipsverbindungen 11 eine Leiterplatine 12 festgelegt. Auf der Oberseite der Leiterplatine 12 sind eine Vielzahl von Kontaktelementen 13 befestigt, die als Mikroschalter ausgebildet sind. Eines der Kontaktelemente 14 an der Unterseite der Leiterplatine 12 ist gemäß Fig. 1 in aufrechter Stellung auf dieser befestigt. Durch eine Öffnung in der Trägerwand 6 ragt eine Anschlußeinheit 15, die auf der Leiterplatine 12 befestigt ist. Diese Anschlußeinheit 15 dient zum Verbinden von nicht dargestellten Anschlußleitungen zur Übertragung von Schaltfunktionen des Lenkstockschalters 1.

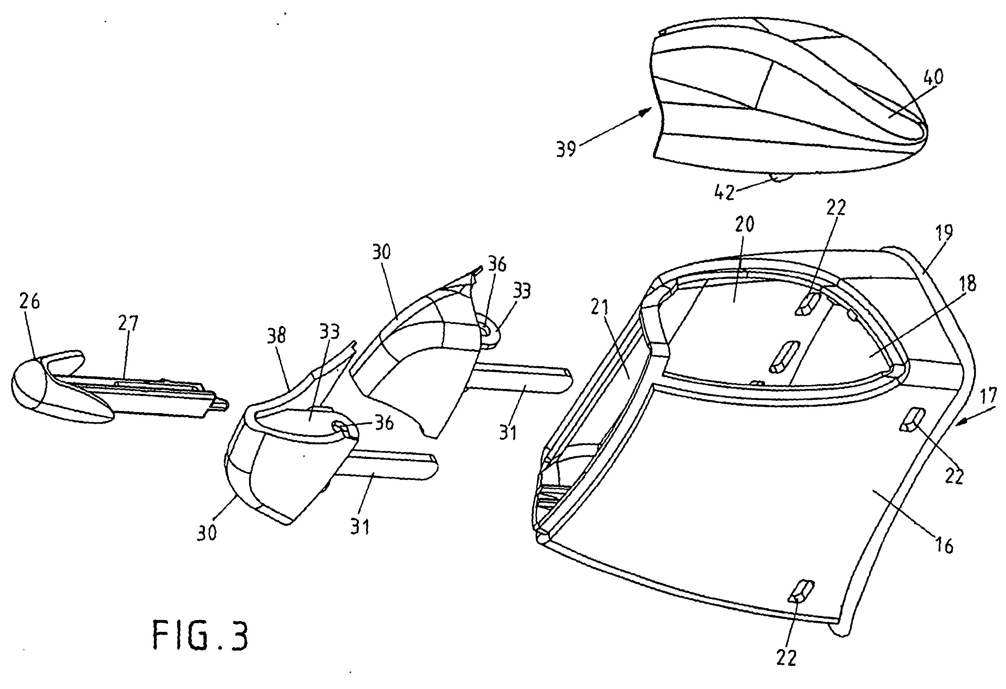

Der Träger 2 wird durch ein in Fig. 3 dargestelltes Trägergehäuse 16 abgedeckt. Dieses weist eine offene Seite 17 auf, durch welche die Steckbefestigung 3 des Trägers 2 ragt. Der durch die offene Seite 17 gebildet Durchbruch 18 ist randseitig von einer Dichtlippe 19 aus einem Gummi- oder Kunststoffmaterial umfaßt, die im montierten Zustand, wenn der Lenkstockschalter 1 an der Halterung des Mantelrohres der Lenksäule des Kraftfahrzeuges befestigt ist, in abdichtender Weise an der Lenkstockverkleidung anliegt. Darüber hinaus weist das Trägergehäuse 16 einen seitlichen Durchbruch 20 und einen stirnseitigen Durchbruch 21 auf. Des weiteren sind am Mantel des Trägerhäuses 16 verteilte Öffnungen 22 angebracht, die mit an der Trägerwand 6 des Trägers 2 angeformten Klipsnasen 23 in Eingriff gebracht sind. Dadurch wird das Trägergehäuse 16 am Träger 2 festgelegt.

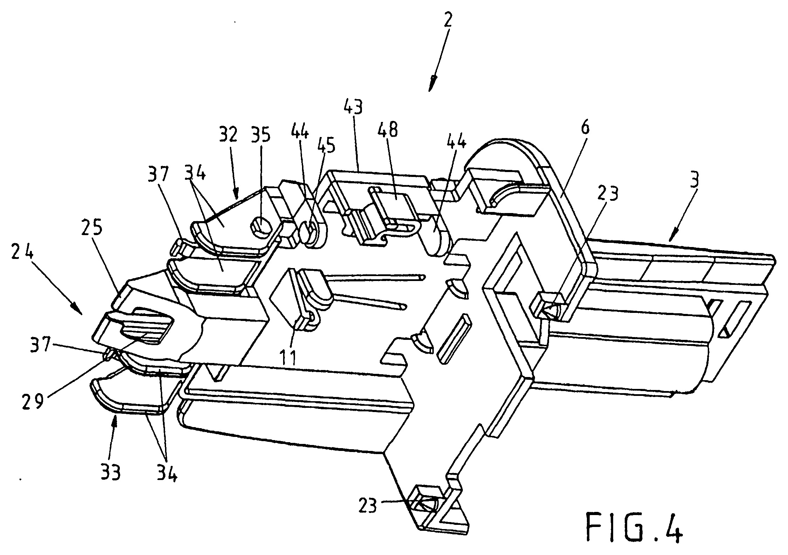

An der Stirnseite 24 des Trägers 2 ist gemäß Fig. 4 eine Aufnahme 25 ausgebildet. In dieser Aufnahme 24 ist eine in radialer Einsteckrichtung des Lenkstockschalters 1 betätigbare Drucktaste 26 eingesetzt, die ein Schaltglied 27 aufweist. Die Wirkungsrichtung der Drucktaste 26 ist durch den Pfeil A in Fig. 1 gekennzeichnet. Am vorderen Ende des Schaltgliedes 27 ist ein Federelement 28 angeordnet, welches mit dem aufrecht befestigten Kontaktelement 14 in Eingriff bringbar ist, so daß bei Betätigen der Drucktaste 26 eine Schaltfunktion durch das Kontaktelement 14 ausgelöst wird. Das Schaltglied 27 der Drucktaste 26 ist im Querschnitt im wesentlichen T-förmig ausgebildet und wird in einer korrespondierenden Führungsnut 29 in der Aufnahme 25 geführt.

Beidseitig der Drucktaste 26 ist jeweils ein Kipptaste 30 an der Stirnseite 24 des Trägers 2 angeordnet, die jeweils ein Schaltglied 31 aufweist, das auf ein zugeordnetes Kontaktelement 13 auf der Leiterplatine 12 einwirkt. Die Wirkungsrichtung der Kipptasten 30 ist durch den Pfeil B in Fig. 1 dargestellt. Die Drucktaste 26 und die Kipptasten 30 ragen im montierten Zustand des Lenkstockschalters 1 durch den stirnseitigen Durchbruch 21 des Trägergehäuses 16.

Jede der Kipptasten 30 ist in einem am Träger 2 ausgebildeten Lagerbock 32 gelagert und mit einem Lagerlaschenpaar 33 versehen. Ebenso weist jeder Lagerbock 32 für die Kipptasten 30 Lagerlaschenpaare 34 auf, an denen jeweils ein Lagerzapfen 35 angeformt ist. Diese Lagerzapfen 35 befinden sich mit entsprechenden Lagerzapfenöffnungen 36 in Eingriff, die in den Lagerlaschenpaaren 33 der Kipptasten 30 ausgebildet sind.

Zwischen jedem Lagerbock 32 an der Stirnseite 24 des Trägers 2 für die Kipptasten 30 ist ein klauenartiges Federelement 37 ausgeformt, welches sich gegen die Innenseite der zugehörigen Kipptaste 30 abstützt, wobei die Klauenform des Federelementes 37 der Form der Kipptaste 30 in diesem Bereich angepaßt ist. Dadurch wird die Kipptaste 30 selbsttätig in ihre Ausgangsstellung zurückbewegt. Die Betätigungsfläche 38 der Kipptaste 30 befindet sich auf einer ihrer Außenseiten.

An einer Längsseite des Trägers 2 ist eine Schwenktaste 39 angeordnet, die durch den Durchbruch 20 im Trägergehäuse 16 ragt. Diese Schwenktaste 39 ist auf Grund ihrer großen Grifffläche an ihrer Außenseite mit einem geschwungenen Betätigungswulst 40 versehen, der auch eine Auf- und Abwärtsbewegung gemäß dem Doppelpfeil C in Fig. 1 unterstützt. Von der Innenseite der Schwenktaste 39 erstrecken sich zwei parallel zueinander beabstandet Schaltglieder 41 und 42, die jeweils ein Kontaktelement 13 auf der Oberseite bzw. auf der Unterseite der Leiterplatine 12 betätigen.

Seitlich am Träger 2 ist ein Lagerbock 43 zur Halterung der Schwenktaste 39 vorgesehen, der aus einem Lagerlaschenpaar 44 gebildet wird, das mit Lagerzapfen 45 versehen ist. Auch die Schwenktaste 39 besitzt ein Lagerlaschenpaar 46, das mit Lagerlaschenöffnungen 47 versehen ist, die sich mit den Lagerzapfen 45 des Lagerlaschenpaares 44 des Lagerbockes 43 in Eingriff befinden. Zwischen dem Lagerlaschenpaar 44 des Lagerbockes 43 ist ein gewundenes Federelement 48 am Träger 2 angeformt, welches sich an einem Wulst 49 an der Innenseite der Schwenktaste 39 abstützt und diese dadurch nach ihrer Betätigung automatisch in ihre Ruhe-, Null- bzw. Ausgangsstellung zurückzwingt.

### Liste der Bezugszeichen

- 1: Lenkstockschalter
- 2: Träger
- 3: Steckbefestigung
- 4: Sollbruchstelle
- 5: Versteifung
- 6: Trägerwand
- 7: Dreifachnutführung
- 8: Klipsarm
- 9: Nut
- 10: Entriegelungsarm
- 11: Klipsverbindung
- 12: Leiterplatine
- 13: Kontaktelemente
- 14: Kontaktelement
- 15: Anschlußeinheit
- 16: Trägergehäuse
- 17: offene Seite
- 18: Durchbruch
- 19: Dichtlippe
- 20: Durchbruch
- 21: Durchbruch
- 22: Öffnungen
- 23: Klipsnasen
- 24: Stirnseite
- 25: Aufnahme
- 26: Drucktaste
- 27: Schaltglied
- 28: Federelement
- 29: Führungsnut
- 30: Kipptaste
- 31: Schaltglied
- 32: Lagerbock
- 33: Lagerlaschenpaar
- 34: Lagerlaschenpaar
- 35: Lagerzapfen
- 36: Lagerzapfenöffnung
- 37: Federelement
- 38: Betätigungsfläche
- 39: Schwenktaste
- 40: Betätigungswulst
- 41: Schaltglied
- 42: Schaltglied
- 43: Lagerbock
- 44: Lagerlaschenpaar
- 45: Lagerzapfen
- 46: Lagerlaschenpaar
- 47: Lagerzapfenöffnung
- 48: Federelement
- 49: Wulst

## Patentansprüche

1. Lenkstockschalter mit einem Träger (2), an dem eine Mehrzahl von in unterschiedliche Betätigungsrichtungen wirkende und mit Schaltgliedern versehene Tasten (26,30,39) gelagert sind, die auf im Träger (2) angeordnete Kontaktelemente (13,14) einwirken, **dadurch gekennzeichnet, daß** der Träger (2) mit zugeordneter Steckbefestigung (3) an einer von einer Lenkstockverkleidung umgebenen Halterung des Mantelrohres der Lenksäule eines Kraftfahrzeuges festlegbar ist, wobei der Träger (2) in einem Trägergehäuse (16) aufgenommen ist, das einerseits zur Lenkstockverkleidung offen und an dieser anliegbar ist und andererseits Durchbrüche zum Aufnehmen der Tasten (26,30,39) und zum Hindurchführen der am Träger (2) ausgebildeten Steckbefestigung (3) aufweist.

2. Lenkstockschalter nach Anspruch 1, **dadurch gekennzeichnet*,* daß** am Träger (2) eine mit Kontaktelementen (13,14) bestückte Leiterplatine (12) angeordnet ist.

3. Lenkstockschalter nach Anspruch 1 oder 2, **dadurch gekennzeichnet, daß** die Kontaktelemente (13,14) als Mikroschalter ausgebildet sind.

4. Lenkstockschalter nach einem der Ansprüche 1 bis 3, **dadurch gekennzeichnet, daß** die offene Seite (17) des Trägergehäuses (16) mit einer Dichtlippe (19) versehen ist, die an der Lenkstockverkleidung anliegbar ist.

5. Lenkstockschalter nach Anspruch 4, **dadurch gekennzeichnet, daß** die Dichtlippe (19) aus einem elastischen Gummi- oder Kunststoffmaterial besteht.

6. Lenkstockschalter nach einem der Ansprüche 1 bis 5, **dadurch gekennzeichnet, daß** zumindest der Träger (2) und die Steckbefestigung (3) als einstückiges Kunststoff-Spritzgußteil ausgebildet sind.

7. Lenkstockschalter nach einem der Ansprüche 1 bis 6, **dadurch gekennzeichnet, daß** im Übergangsbereich des Trägers (2) zur Steckbefestigung (3) eine Sollbruchstelle (4) eingeformt ist.

8. Lenkstockschalter nach einem der Ansprüche 1 bis 7, **dadurch gekennzeichnet, daß** die Steckbefestigung (3) mit einer Dreifachnutführung (7) versehen ist, die in ein entsprechendes Gegenstück der Lenkstockverkleidung einführbar ist.

9. Lenkstockschalter nach einem der Ansprüche 1 bis 8, **dadurch gekennzeichnet, daß** in der Steckbefestigung (3) ein Klipsarm (8) federnd gelagert ist, der sich mit der Halterung des Mantelrohres der Lenksäule in Rasteingriff befinden kann, wobei dem Klipsarm (8) ein Entriegelungsarm (10) zugeordnet ist.

10. Lenkstockschalter nach einem der Ansprüche 1 bis 9, **dadurch gekennzeichnet, daß** an der Stirnseite (24) des Trägers (2) eine in linearer Einsteckrichtung des Trägers (2) in die Halterung des Mantelrohres betätigbare Drucktaste (26) angeordnet ist, die mit ihrem Schaltglied (27) ein auf der Leiterplatine (12) befestigtes Kontaktelement (14) betätigt.

11. Lenkstockschalter nach Anspruch 10, **dadurch gekennzeichnet, daß** das Kontaktelement (14) gegenüber den anderen Kontaktelementen (13) in aufrechter Stellung auf der Leiterplatine (12) befestigt ist.

12. Lenkstockschalter nach einem der Ansprüche 10 bis 11, **dadurch gekennzeichnet, daß** die Drucktaste (26) federnd (28) gegen das zugehörige Kontaktelement (14) abgestützt ist.

13. Lenkstockschalter nach einem der Ansprüche 10 bis 12, **dadurch gekennzeichnet, daß** die Drucktaste (26) in einer mit der Stirnseite (24) des Trägers (2) einstückig ausgeformten Aufnahme (25) gelagert ist.

14. Lenkstockschalter nach einem der Ansprüche 10 bis 13, **dadurch gekennzeichnet, daß** beidseitig der Drucktaste (26) jeweils eine weitere lotrecht zu dieser betätigbare Kipptaste (30) an der Stirnseite (24) des Trägers (2) angeordnet ist, wobei deren jeweiliges Schaltglied (31) ein zugeordnetes, auf der Leiterplatine (12) befestigtes Kontaktelement (13) betätigt.

15. Lenkstockschalter nach einem der Ansprüche 10 bis 14, **dadurch gekennzeichnet, daß** die beidseitig der Drucktaste (26) angeordneten Kipptasten (30) in jeweils einem einstückig mit dem Träger (2) ausgebildeten Lagerbock (32) kippbar gelagert sind.

16. Lenkstockschalter nach Anspruch 15, **dadurch gekennzeichnet, daß** jeder Lagerbock (32) und jede zugehörige Kipptaste (30) Lagerlaschenpaare (33,34) aufweist, wobei die Lagerlaschenpaare (33,34) des Lagerbockes (32) oder der Kipptaste (30) mit Lagerzapfen (35) bzw. Lagerzapfenöffnungen (36) versehen sind, die sich in gegenseitigem Eingriff befinden.

17. Lenkstockschalter nach einem der Ansprüche 15 bis 16, **dadurch gekennzeichnet, daß** jede Kipptaste (30) mittels eines am Lagerbock (32) angeformten Federelementes (37) in ihrer Ruhestellung gehalten ist, das sich gegen die Innenseite der Kipptaste (30) abstützt.

18. Lenkstockschalter nach einem der Ansprüche 1 bis 17, **dadurch gekennzeichnet, daß** an einer Längsseite des Trägers (2) eine aus einer Ruhestellung auf- und abbewegbare Schwenktaste (39) angeordnet ist, die zwei zueinander beabstandete Schaltglieder (41,42) aufweist, welche jeweils ein auf der Oberseite und auf der Unterseite der Leiterplatine (12) befestigtes Kontaktelement (13) betätigen.

19. Lenkstockschalter nach Anspruch 18, **dadurch gekennzeichnet, daß** die Schwenktaste (39) in einem einstückig mit dem Träger (2) ausgebildeten Lagerbock (43) schwenkbar gelagert ist.

20. Lenkstockschalter nach Anspruch 19, **dadurch gekennzeichnet, daß** der Lagerbock (43) und die Schwenktaste (39) Lagerlaschenpaare (44,46) aufweisen, wobei die Lagerlaschenpaare (44,46) des Lagerbockes (43) oder der Schwenktaste (39) mit Lagerzapfen (45) oder Lagerzapfenöffnungen (47) versehen sind, die sich in gegenseitigem Eingriff befinden.

21. Lenkstockschalter nach einem der Ansprüche 19 bis 20, **dadurch gekennzeichnet, daß** die Schwenktaste (39) mittels eines am Lagerbock (43) angeformten Federelementes (48) in ihrer Ruhestellung gehalten ist, das sich gegen die Innenseite der Schwenktaste (39) abstützt.

22. Lenkstockschalter nach einem der Ansprüche 2 bis 21, **dadurch gekennzeichnet, daß** die Leiterplatine (12) mittels Klipsverbindungen (11) am Träger (2) befestigt ist.

23. Lenkstockschalter nach einem der Ansprüche 2 bis 22, **dadurch gekennzeichnet, daß** die Leiterplatine (12) mit einer Anschlußeinheit (15) zum Verbinden mit Anschlußleitungen zur Übertragung von Schaltfunktionen der durch die Tasten (26,30,39) betätigbaren Kontaktelemente (13,14) versehen ist.

24. Lenkstockschalter nach einem der Ansprüche 1 bis 23, **dadurch gekennzeichnet, daß** das Trägergehäuse (16) mittels Klipsverbindungen (22,23) am Träger (2) befestigt ist.

25. Lenkstockschalter nach einem der Ansprüche 1 bis 24, **dadurch gekennzeichnet, daß** jede der Tasten (26,30,39) mit einer Schaltfunktion für ein im Kraftfahrzeug vorgesehenes Radio- und/oder Kassettenabspiel- und/oder CD-Abspiel- und/oder CD-Wechslergerät belegt ist.

26. Lenksäule mit einem Mantelrohr und einer Halterung, **dadurch gekennzeichnet, daß** zwei Schalter nach Anspruch 1 sich gegenüberliegend an der Halterung des Mantelrohres der Lenksäule des Kraftfahrzeuges angeordnet sind.

## Claims

1. Steering column switch having a support (2) on which is mounted a plurality of push buttons (26, 30, 39) acting in different actuating directions and provided with switching members which act on contact elements (13, 14) arranged in the support (2), **characterised in that** the support (2) with an associated plug-in fastening (3) is fixable on a mounting surrounded by a steering column casing on the jacket tube of the steering column of a motor vehicle, wherein the support (2) is accommodated in a support housing (16) which on one side is open to the steering column casing and fittable against the latter and on the other side possesses openings for accommodating the push buttons (26, 30, 39) and for leading through the plug-in fastening (3) constructed on the support (2).

2. Steering column switch according to claim 1, **characterised in that** on the support (2) a printed circuit board (12) equipped with contact elements (13, 14) is arranged.

3. Steering column switch according to claim 1 or 2, **characterised in that** the contact elements (13, 14) are constructed in the form of microswitches.

4. Steering column switch according to any of claims 1 to 3, **characterised in that** the open side (17) of the support housing (16) is provided with a sealing lip (19) which is fittable against the steering column casing.

5. Steering column switch according to claim 4, **characterised in that** the sealing lip (19) consists of an elastic rubber or plastic material.

6. Steering column switch according to any of claims 1 to 5, **characterised in that** at least the support (2) and the plug-in fastening (3) are constructed as a one-piece, injection-moulded plastic part.

7. Steering column switch according to any of claims 1 to 6, **characterised in that** in the transition region of the support (2) to the plug-in fastening (3) a predetermined breaking point (4) is moulded in place.

8. Steering column switch according to any of claims 1 to 7, **characterised in that** the plug-in fastening (3) is provided with a triple groove guide (7) which is introduceable into a corresponding mating part of the steering column casing.

9. Steering column switch according to any of claims 1 to 8, **characterised in that** in the plug-in fastening (3) a clip arm (8) is elastically mounted which can be located in locking engagement with the mounting of the jacket tube of the steering column, wherein the clip arm (8) is associated with an unlocking arm (10).

10. Steering column switch according to any of claims 1 to 9, **characterised in that** on the end face (24) of the support (2) a push button (26) actuable into the mounting of the jacket tube in the linear plug-in direction of the support (2) is arranged which push button actuates by its switching member (27) a contact element (14) fastened on the printed circuit board (12).

11. Steering column switch according to claim 10, **characterised in that** the contact element (14) is fastened in upright position on the printed circuit board (12) opposite the other contact elements (13).

12. Steering column switch according to any of claims 10 to 11, **characterised in that** the push button (26) is supported elastically (28) against the associated contact element (14).

13. Steering column switch according to any of claims 10 to 12, **characterised in that** the push button (26) is mounted in a receptacle (25) formed in one piece with the end face (24) of the support (2).

14. Steering wheel switch according to any of claims 10 to 13, **characterised in that** on both sides of the push button (26) there is arranged in each case on the end face (24) of the support (2) another toggle button (30) actuable perpendicular to said push button, wherein the respective switching member (31) of each actuates an associated contact element (13) fastened on the printed circuit board (12).

15. Steering wheel switch according to any of claims 10 to 14, **characterised in that** the toggle buttons (30) arranged on both sides of the push button (26) are each mounted tiltably in a bearing block (32) constructed in one piece with the support (2).

16. Steering column switch according to claim 15, **characterised in that** each bearing block (32) and each associated toggle button (30) possesses pairs of bearing brackets (33, 34), wherein the pairs of bearing brackets (33, 34) of the bearing block (32) or of the toggle button (30) are provided with bearing pins (35) or bearing pin openings (36) located in reciprocal engagement.

17. Steering column switch according to any of claims 15 to 16, **characterised in that** each toggle button (30) is held in the neutral position thereof by means of a spring element (37) moulded onto the bearing block (32) which element supports itself against the inside of the toggle button (30).

18. Steering column switch according to any of claims 1 to 17, **characterised in that** on a longitudinal side of the support (2) a pivot button (39) movable up and down out of a neutral position is arranged which possesses two switching members (41, 42) spaced apart from one another which each actuate a contact element (13) fastened on the upper side and on the lower side of the printed circuit board (12).

19. Steering column switch according to claim 18, **characterised in that** the pivot button (39) is mounted pivotably in a bearing block (43) constructed in one piece with the support (2).

20. Steering column switch according to claim 19, **characterised in that** the bearing block (43) and the pivot button (39) possess pairs of bearing brackets (44, 46), wherein the pairs of bearing brackets (44, 46) of the bearing block (43) or of the pivot button (39) are provided with bearing pins (45) or bearing pin openings (47) which are located in reciprocal engagement.

21. Steering column switch according to any of claims 19 to 20, **characterised in that** the pivot button (39) is held in the neutral position thereof by means of a spring element (48) moulded onto the bearing block (43) which element supports itself against the inside of the pivot button (39).

22. Steering column switch according to any of claims 2 to 21, **characterised in that** the printed circuit board (12) is fastened to the support (2) by means of clip connections (11).

23. Steering column switch according to any of claims 2 to 22, **characterised in that** the printed circuit board (12) is provided with a connecting unit (15) for connection to connecting leads for the transmission of switching functions of the contact elements (13, 14) actuable by the buttons (26, 30, 39).

24. Steering column switch according to any of claims 1 to 23, **characterised in that** the support housing (16) is fastened to the support (2) by means of clip connections (22, 23).

25. Steering column switch according to any of claims 1 to 24, **characterised in that** each of the buttons (26, 30, 39) is dedicated to a switching function for a radio and/or cassette player and/or CD player and/or CD changer provided in the motor vehicle.

26. Steering column having a jacket tube and a mounting, **characterised in that** two switches according to claim 1 located opposite one another are arranged on the mounting of the jacket tube of the steering column of the motor vehicle.

## Revendications

1. Commutateur de colonne de direction avec un support (2) sur lequel est montée une pluralité de touches (26, 30, 39) qui agissent dans différentes directions d'actionnement et sont munies d'organes de commutation et qui agissent sur des éléments de contact (13, 14) disposés dans le support (2), **caractérisé en ce que** le support (2) à fixation enfichable associée (3) peut être assujetti à une attache, entourée d'un habillage de colonne de direction, du tube enveloppe de la colonne de direction d'un véhicule, le support (2) étant reçu dans un boîtier porteur (16) qui, d'une part, est ouvert en direction de l'habillage de colonne de direction et est applicable contre celui-ci et, d'autre part, est pourvu de passages pour recevoir les touches (26, 30, 39) et pour introduire la fixation enfichable (3) prévue sur le support (2).

2. Commutateur de colonne de direction selon la revendication 1, **caractérisé en ce que** sur le support (2) est disposée une plaque de circuit imprimé (12) garnie d'éléments de contact (13, 14).

3. Commutateur de colonne de direction selon la revendication 1 ou 2, **caractérisé en ce que** les éléments de contact (13, 14) sont conformés en commutateurs miniatures.

4. Commutateur de colonne de direction selon une des revendications 1 à 3, **caractérisé en ce que** le côté ouvert (17) du boîtier porteur (16) est pourvu d'une lèvre d'étanchéité (19) qui est applicable contre l'habillage de colonne de direction.

5. Commutateur de colonne de direction selon la revendication 4, **caractérisé en ce que** la lèvre d'étanchéité (19) est réalisée en matière caoutchouteuse ou synthétique élastique.

6. Commutateur de colonne de direction selon une des revendications 1 à 5, **caractérisé en ce qu'**au moins le support (2) et la fixation enfichable (3) sont conformés en pièce en matière plastique moulée par injection d'un seul tenant.

7. Commutateur de colonne de direction selon une des revendications 1 à 6, **caractérisé en ce qu'**un emplacement de rupture imposée (4) est ménagé dans la zone de raccordement du support (2) avec la fixation enfichable (3).

8. Commutateur de colonne de direction selon une des revendications 1 à 7, **caractérisé en ce que** la fixation enfichable (3) est pourvue d'un guidage à triple rainure (7) qui peut être introduit dans une pièce antagoniste correspondante de l'habillage de colonne de direction.

9. Commutateur de colonne de direction selon une des revendications 1 à 8, **caractérisé en ce que** dans la fixation enfichable (3) est monté élastiquement un bras de clipsage (8) qui peut se trouver en prise encliquetée avec l'attache du tube enveloppe de la colonne de direction, un bras de déverrouillage (10) étant associé au bras de clipsage (8).

10. Commutateur de colonne de direction selon une des revendications 1 à 9, **caractérisé en ce que** sur le côté frontal (24) du support (2) est disposée une touche-poussoir (26) qui est actionnable dans la direction linéaire d'enfichage du support (2) dans l'attache du tube enveloppe et qui, par l'intermédiaire de son organe de commutation (27), agit sur un élément de contact (14) fixé à la plaque de circuit imprimé (12).

11. Commutateur de colonne de direction selon la revendication 10, **caractérisé en ce que**, par rapport aux autres éléments de contact (13), l'élément de contact (14) est fixé en position verticale sur la plaque de circuit imprimé (12).

12. Commutateur de colonne de direction selon une des revendications 10 à 11, **caractérisé en ce que** la touche-poussoir (26) prend appui de manière élastique (28) sur l'élément de contact associé (14).

13. Commutateur de colonne de direction selon une des revendications 10 à 12, **caractérisé en ce que** la touche-poussoir (26) est montée dans un logement (25) moulé d'un seul tenant avec le côté frontal (24) du support (2).

14. Commutateur de colonne de direction selon une des revendications 10 à 13, **caractérisé en ce que** de part et d'autre de la touche-poussoir (26) est disposée, sur le côté frontal (24) du support (2), une touche pivotante (30) qui est actionnable perpendiculairement à celle-ci et dont l'organe de commutation (31) actionne un élément de contact associé (13) fixé à la plaque de circuit imprimé (12).

15. Commutateur de colonne de direction selon une des revendications 10 à 14, **caractérisé en ce que** les touches pivotantes (30) disposées de part et d'autre de la touche-poussoir (26) sont chacune montées à pivotement dans un bloc palier (32) conçu d'un seul tenant avec le support (2).

16. Commutateur de colonne de direction selon la revendication 15, **caractérisé en ce que** chaque bloc palier (32) et chaque touche pivotante associée (30) comporte des paires de pattes de support (33, 34), les paires de pattes de support (33, 34) du bloc palier (32) ou de la touche pivotante (30) étant pourvues de tétons de support (35), respectivement d'orifices pour tétons de support (36) qui se trouvent en prise mutuelle.

17. Commutateur de colonne de direction selon une des revendications 15 à 16, **caractérisé en ce que** chaque touche pivotante (30) est maintenue dans sa position de repos au moyen d'un élément élastique (37) qui est surmoulé sur le bloc palier (32) et qui prend appui sur le côté intérieur de la touche pivotante (30).

18. Commutateur de colonne de direction selon une des revendications 1 à 17, **caractérisé en ce que** sur un côté longitudinal du support (2) est disposée une touche basculante (39) qui peut être montée et descendue à partir d'une position de repos et qui comporte deux organes de commutation distants l'un de l'autre (41, 42), lesquels actionnent chacun un élément de contact (13) fixé sur le dessus et sur le dessous de la plaque de circuit imprimé (12).

19. Commutateur de colonne de direction selon la revendication 18, **caractérisé en ce que** la touche basculante (39) est montée à basculement dans un bloc palier (43) conçu d'un seul tenant avec le support (2).

20. Commutateur de colonne de direction selon la revendication 19, **caractérisé en ce que** le bloc palier (43) et la touche basculante (39) comportent des paires de pattes de support (44, 46), les paires de pattes de support (44, 46) du bloc palier (43) ou de la touche basculante (39) étant pourvues de tétons de support (45) ou d'orifices pour tétons de support (47) qui se trouvent en prise mutuelle.

21. Commutateur de colonne de direction selon une des revendications 19 à 20, **caractérisé en ce que** la touche basculante (39) est maintenue dans sa position de repos au moyen d'un élément élastique (48) qui est surmoulé sur le bloc palier (43) et qui prend appui sur le côté intérieur de la touche basculante (39).

22. Commutateur de colonne de direction selon une des revendications 2 à 21, **caractérisé en ce que** la plaque de circuit imprimé (12) est fixée au support (2) au moyen de liaisons clipsées (11).

23. Commutateur de colonne de direction selon une des revendications 2 à 22, **caractérisé en ce que** la plaque de circuit imprimé (12) est pourvue d'un module de connexion (15) destiné à être relié à des lignes de connexion pour la transmission de fonctions de commutation des éléments de contact (13, 14) actionnables par l'intermédiaire des touches (26, 30, 39).

24. Commutateur de colonne de direction selon une des revendications 1 à 23, **caractérisé en ce que** le boîtier porteur (16) est fixé au support (2) au moyen de liaisons clipsées (22, 23).

25. Commutateur de colonne de direction selon une des revendications 1 à 24, **caractérisé en ce que** chacune des touches (26, 30, 39) correspond à une fonction de commutation pour une radio et/ou un lecteur de cassettes et/ou un lecteur de CD et/ou un changeur de CD prévus dans le véhicule.

26. Colonne de direction avec un tube enveloppe et une attache, **caractérisée en ce que** deux commutateurs selon la revendication 1 sont disposés l'un en face de l'autre sur l'attache du tube enveloppe de la colonne de direction du véhicule.
